# FASCICULE DE BREVET EUROPEEN

(11) **EP 3 271 246 B1**
(45) Date de publication et mention de la délivrance du brevet: **08.05.2019**
(21) Numéro de dépôt: 16711879.3
(22) Date de dépôt: 09.03.2016
(51) Int. Cl.: B64D 1/22, B64D 45/02

(54) **CABLE DE LEVAGE POUR TREUIL D'HELICOPTERE**
HUBSEIL FÜR EIN HUBSCHRAUBERHEBEZEUG
HOISTING CABLE FOR A HELICOPTER HOIST

(30) Priorité: 17.03.2015 FR 1552171
(43) Date de publication de la demande: 24.01.2018
(73) Titulaire: REEL, 69450 Saint-Cyr-au-Mont-d'Or (FR)
(72) Inventeur: SEVERY, Paul, 13300 Salon de Provence (FR); FIGOUREUX, David, 13300 Salon de Provence (FR)
(74) Mandataire: Cabinet Laurent & Charras
(86) Numéro de dépôt international: PCT/FR2016/050537
(87) Numéro de publication internationale: WO 2016/146918

(56) Documents cités:
- EP-A1- 0 161 993
- DE-A1-102007 049 819
- FR-A1- 2 621 166
- GB-A- 2 152 088
- US-A- 3 879 638
- US-A- 4 101 825
- US-B1- 6 942 177

## Description

### DOMAINE DE L'INVENTION

L'invention se rapporte au domaine des treuils embarqués dans les hélicoptères.

Plus spécifiquement, l'invention vise un câble de levage pour treuils embarqués de nature composite ou textile, présentant des propriétés physiques de résistance notamment voisines de celles de câbles acier traditionnels, tout en étant nettement plus légers.

### ETAT ANTERIEUR DE LA TECHNIQUE

La mise en oeuvre de câbles composites ou textiles, c'est-à-dire, a priori électriquement isolants, génère deux types de problèmes.

Le premier concerne la mise au potentiel électrostatique de l'hélicoptère par rapport à la charge à embarquer. Il convient en effet de rappeler que lors des vols des hélicoptères, notamment en mode stationnaire, la surface de l'aéronef est soumise à l'impact de particules de toute nature, induisant la création d'une charge électrique. Cette charge électrique génère de fait une différence de potentiel entre l'hélicoptère et la charge, humaine (dans le cas de sauvetage) ou matérielle susceptible d'être portée par le câble d'un treuil embarqué, cette différence de potentiel pouvant atteindre plusieurs centaines de kilovolts. Elle peut donc sérieusement blesser le sauveteur ou la personne à sauver, ou endommager la charge transportée.

Une solution pour s'affranchir de cet inconvénient réside dans l'utilisation d'un second câble conducteur, destiné à relier l'hélicoptère au sol, et dévolu à la seule fonction de supprimer la différence de potentiel ainsi générée. Cette solution n'est pas satisfaisante, en raison des dangers évidents de voir ce second câble se prendre dans l'un des deux rotors de l'hélicoptère.

Cette difficulté est exacerbée lorsque l'on met en oeuvre un câble de levage non conducteur. En effet, si dans le cadre de la mise en oeuvre de câbles acier, conducteur électrique, cette mise au potentiel peut intervient de manière instantanée, en raison de la conductivité électrique de l'acier, c'est-à-dire que l'opérateur provoque le contact dudit câble avec le sol avant de l'arrimer à la charge, tel n'est pas le cas lorsqu'on met en oeuvre un câble non conducteur. De fait, la totalité de l'électricité statique emmagasinée par l'hélicoptère se décharge sur la charge lorsque cette dernière entre en contact avec le potentiel terrestre, ladite charge étant éventuellement humaine, entraînant des risques de blessure.

Afin de pallier cette difficulté, il a été décrit un câble composite conducteur. Ce faisant, ce câble présente les mêmes propriétés électrostatiques qu'un câble en acier. Pour autant, on est toujours confrontés aux mêmes difficultés de décharges électrostatiques visées ci-dessus.

Une autre difficulté à vaincre avec la mise en oeuvre de câbles composites ou textiles concerne la détection de l'usure localisée desdits câbles pour, le cas échéant, pourvoir à leur remplacement. En effet, s'agissant des câbles acier, l'analyse de l'usure du câble se fait par visualisation extérieure, induisant certes le déroulé total dudit câble, mais permettant de localiser relativement facilement les éventuelles faiblesses dudit câble. Cependant, cette opération engendre, en raison de la nécessité de dérouler intégralement le câble, une consommation de temps importante, des problématiques de maintenance, et ces opérations répétées induisent une usure prématurée de la mécanique du treuil.

En matière de câble textile ou composite, les défauts internes du câble sont très difficilement visualisables. De fait, on ne dispose pas d'éléments susceptibles d'informer l'utilisateur de la nécessité de procéder au remplacement du câble.

L'objet de l'invention vise à pallier ces inconvénients.

### EXPOSE DE L'INVENTION

L'invention vise donc un treuil d'hélicoptère, ledit treuil étant en continuité électrique avec l'hélicoptère, et comprenant un tambour sur lequel vient s'enrouler un câble de levage, dont l'extrémité libre reçoit un crochet de levage. Ce câble de levage comprend au moins un conducteur de l'électricité intégré dans une structure non conductrice constitutive dudit câble.

Selon l'invention, ce câble comprend au moins un second conducteur de l'électricité, isolé électriquement du premier conducteur selon toute la longueur du câble de levage, et l'ensemble constitué par le tambour, les deux conducteurs de l'électricité intégrés dans le câble de levage et le crochet de levage forme un circuit électrique, fermé au niveau d'un interrupteur, ledit interrupteur étant positionné soit au niveau dudit crochet de levage, soit au niveau du tambour.

Selon une caractéristique préférée de l'invention, le circuit électrique ainsi constitué est fermé au moyen d'un interrupteur, actionnable par l'équipage, par l'opérateur du treuil ou automatiquement. Ce faisant, on assure la fonction de continuité électrostatique entre l'hélicoptère et le sol.

Selon une autre caractéristique de l'invention, le circuit électrique comprend en outre un organe de mesure d'une grandeur électrique, monté en série sur l'un des conducteurs de l'électricité. Cette grandeur électrique peut être par exemple la résistance ou la résistivité électrique du circuit. Si la grandeur mesurée est inférieure ou supérieure à une valeur déterminée, cela indique une rupture d'au moins l'un des deux conducteurs électriques, nécessitant le changement du câble.

Avantageusement, les deux conducteurs électriques présentent une résistance à la rupture et une tenue à la fatigue inférieures à celles de la structure composite ou textile du câble dans laquelle ils sont intégrés, dans un but évident de sécurité.

### BREVE DESCRIPTION DES FIGURES

La manière dont l'invention peut être réalisée et les avantages qui en découlent, ressortiront mieux de l'exemple de réalisation qui suit, donné à titre indicatif et non limitatif à l'appui des figures annexées.
La figure 1 est une représentation schématique en section transversale du câble de l'invention.
Les figures 2a et 2b sont des représentations schématiques illustrant le cheminement des conducteurs électriques au sein du câble de l'invention, respectivement avec l'interrupteur respectivement positionné au niveau du treuil ou du crochet terminal du câble dudit treuil.
La figure 3 est une représentation schématique analogue à la figure 2a représentant une variante de l'invention.
La figure 4 est une représentation schématique analogue à la figure 2a d'une autre variante de l'invention.
La figue 5 est une représentation schématique en section du câble de la figure 4.

### DESCRIPTION DETAILLEE DE L'INVENTION

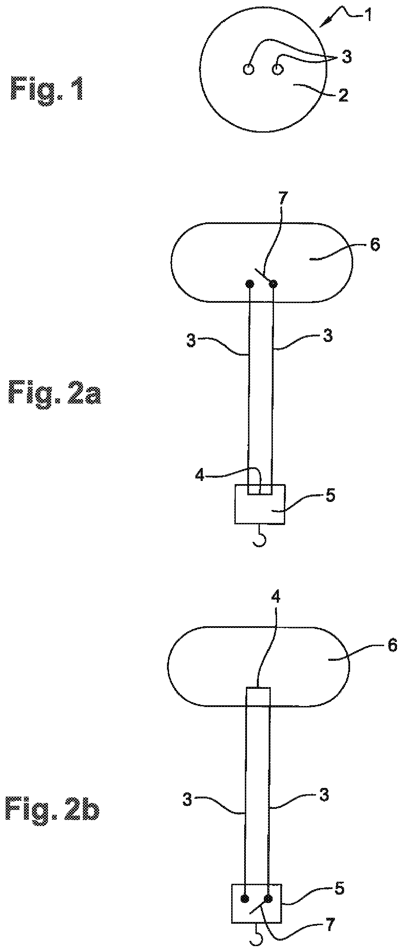

On a donc représenté en relation avec la figure 1 une représentation schématique en section d'un câble (1) pour treuil d'hélicoptère selon l'invention. Celui-ci comporte notamment une base (2) réalisée en matériau composite ou en textile, non conducteur de l'électricité. Typiquement, cette base est réalisée en aramide.

Selon une caractéristique de l'invention, sont intégrés dans cette structure deux fils conducteurs électriques (3), typiquement réalisés en acier inoxydable et de diamètre voisin de 1 millimètre. Ces fils conducteurs métalliques (3) se prolongent, bien évidemment, sur toute la longueur du câble (1).

Ainsi qu'on peut l'observer sur les figures, ces deux fils métalliques (3) sont isolés électriquement l'un de l'autre sur toute la longueur du câble (1). En revanche, ils sont reliés l'un à l'autre (4), et donc en continuité électrique, au niveau du crochet de levage (5) (figure 2a) ou au niveau du tambour de levage du treuil (6) (figure 2b). Ce faisant, ils constituent un circuit électrique, dont les deux autres bornes vont être décrites ci-après.

Ainsi donc, et tel que représenté sur les figures 2a et 2b, les deux autres bornes du circuit électrique ainsi constitué sont ménagées au sein du tambour de levage dont le treuil (6) est constitué. Ces bornes sont susceptibles d'être mises en contact électrique l'une avec l'autre au moyen d'un interrupteur (7) (figure 2a).

Alternativement, la continuité électrique entre les deux fils (3) pourrait être réalisée au sein du tambour de levage, et l'interrupteur (7) pourrait être positionné au sein du crochet de levage (5) (figure 2b).

En fonctionnement normal, c'est-à-dire lorsqu'aucune charge n'est suspendue au câble, l'interrupteur (7) est ouvert. Autrement dit, le circuit électrique constitué par les deux fils ou câbles électriques (3) n'est pas fermé.

En revanche, lors des phases de treuillage ou de levage, cet interrupteur (7) est actionné, soit par l'équipage, soit par l'opérateur du treuil, soit encore automatiquement, de telle sorte à fermer ledit circuit. Ce faisant, la fermeture de l'interrupteur (7) engendre la mise au potentiel électrostatique de l'hélicoptère avec la charge suspendue au crochet (5) ou à tout système équivalent.

On conçoit de fait que la charge peut être protégée tout au long du treuillage ou du levage contre tout choc électrique par fermeture imposée du circuit quand les conditions opérationnelles sont réunies.

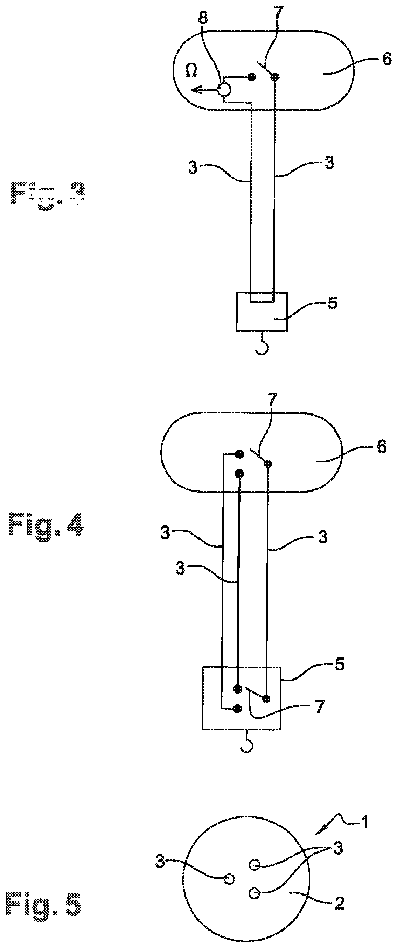

Selon une caractéristique avantageuse de l'invention, représentée en relation avec la figure 3, le circuit électrique constitué par les deux fils ou câbles électriques (3) contient en outre un dispositif ou organe (8) de mesure d'une grandeur électrique, en l'espèce, la résistance ou la résistivité. Cet organe de mesure, par exemple un ohmmètre, est par exemple positionné au niveau du treuil.

Il est aisément concevable que dès lors que au moins l'un des fils ou câbles électriques (3) est rompu, la résistivité ou la résistance augmente drastiquement. On peut de fait fixer une valeur limite à cette grandeur, par exemple 50 Ω pour la résistance, au-delà de laquelle le câble de treuillage est réputé non conforme et doit être remplacé.

Afin en outre de garantir de manière accrue la sécurité, on met en oeuvre des fils ou câbles électriques (en termes de matériau constitutif et/ou de dimensions) dont la résistance mécanique à la rupture et la tenue à la fatigue sont plus faibles que celles de la structure textile ou composite (2) au sein de laquelle ils sont intégrés.

Selon une autre variante de l'invention illustrée au sein des figures 4 et 5, on met en place non pas deux mais trois fils conducteurs, selon un montage en va et vient, bien connu dans le domaine des circuits électriques. Dans ce cas, le circuit comporte deux interrupteurs, respectivement positionnés au niveau du crochet de levage et du treuil.

On conçoit tout l'intérêt du treuil de l'invention.

Tout d'abord, il permet une protection de la charge, notamment en matière électrostatique dans toutes les phases du treuillage. On protège également l'opérateur du treuil lors de l'introduction de la charge dans la soute de l'hélicoptère.

Parallèlement, il devient possible d'analyser automatiquement l'intégrité du câble de levage, et donc de prévenir sa rupture.

## Revendications

1. Treuil d'hélicoptère, ledit treuil étant en continuité électrique avec l'hélicoptère, et comprenant un tambour sur lequel vient s'enrouler un câble de levage (1), dont l'extrémité libre reçoit un crochet de levage (5), ledit câble de levage (1) comprenant au moins un premier conducteur (3) de l'électricité intégré dans une structure non conductrice (2), ***caractérisé :***
• **en ce que** le câble de levage comprend au moins un second conducteur de l'électricité, isolé électriquement du premier conducteur selon toute la longueur du câble de levage, et
• **en ce que** l'ensemble constitué par le tambour, les deux conducteurs de l'électricité (3) intégrés dans le câble de levage et le crochet de levage (5) forme un circuit électrique, fermé au niveau d'un interrupteur (7), ledit interrupteur (7) étant positionné soit au niveau dudit crochet de levage, soit au niveau du tambour.

2. Treuil d'hélicoptère selon la revendication 1, ***caractérisé* en ce que** l'interrupteur (7) est actionnable par l'équipage de l'hélicoptère, par l'opérateur du treuil ou automatiquement.

3. Treuil d'hélicoptère selon l'une des revendications 1 et 2, ***caractérisé* en ce que** le circuit électrique comprend en outre un organe de mesure d'une grandeur électrique (8), monté en série sur l'un des conducteurs de l'électricité (3).

4. Treuil d'hélicoptère selon la revendication 3, ***caractérisé* en ce que** la grandeur électrique mesurée est la résistance ou la résistivité.

5. Treuil d'hélicoptère selon l'une des revendications 1 à 4, ***caractérisé* en ce que** le câble de levage comprend un troisième conducteur de l'électricité, et **en ce que** le circuit électrique est monté en va et vient entre deux interrupteurs positionnés au sein du tambour et du crochet de levage.

6. Treuil d'hélicoptère selon l'une des revendications 1 à 5, ***caractérisé* en ce que** les conducteurs électriques (3) présentent une résistance à la rupture et une tenue à la fatigue inférieures à celles de la structure composite ou textile (2) du câble de levage dans laquelle ils sont intégrés.

## Patentansprüche

1. Hubschrauberhebezeug, wobei sich dieses Hebezeug in elektrischer Kontinuität mit dem Hubschrauber befindet und eine Trommel umfasst, um die sich ein Hubseil (1) wickelt, an dessen freiem Endstück sich ein Lasthaken (5) befindet, wobei dieses Hubseil mindestens einen ersten elektrischen Leiter (3), umfasst der in eine nicht leitende Struktur (2) eingebaut ist, ***dadurch gekennzeichnet,***
• **dass** das Hubseil mindestens einen zweiten elektrischen Leiter umfasst, der über die gesamte Länge des Hubseils hinweg elektrisch vom ersten Leiter isoliert ist,
• und **dass** die Baugruppe, die aus der Trommel, den beiden im Hubseil integrierten elektrischen Leitern (3) und dem Lasthaken (5)besteht, einen elektrischen Stromkreis bilden, der an einem Schalter (7) geschlossen ist, wobei dieser Schalter (7) entweder in Höhe des Lasthakens oder in Höhe der Trommel angeordnet ist.

2. Hubschrauberhebezeug gemäß Anspruch 1, ***dadurch gekennzeichnet,* dass** der Schalter (7) von der Hubschrauberbesatzung, dem Bediener des Hebezeugs oder automatisch betätigt werden kann.

3. Hubschrauberhebezeug gemäß einem der Ansprüche 1 und 2, ***dadurch gekennzeichnet,* dass** der Schaltkreis außerdem ein Messorgan für eine elektrische Größe (8) umfasst, das in Serie auf einem der elektrischen Leiter (3) montiert ist.

4. Hubschrauberhebezeug gemäß Anspruch 4, ***dadurch gekennzeichnet,* dass** es sich bei der gemessenen elektrischen Größe um den Widerstand oder die Resistivität handelt.

5. Hubschrauberhebezeug gemäß einem der Ansprüche 1 bis 4, ***dadurch gekennzeichnet,* dass** das Hubseil einen dritten elektrischen Leiter umfasst und dass der elektrische Stromkreis zwischen zwei Wechselschaltern montiert ist, die sich in der Trommel und dem Lasthaken befinden.

6. Hubschrauberhebezeug gemäß einem der Ansprüche 1 bis 5, ***dadurch gekennzeichnet,* dass** die elektrischen Leiter (3) eine Reissfestigkeit und eine Ermüdungsfestigkeit aufweisen, die geringer sind, als die des Verbunds- oder Textilmaterials (2) des Hubseils, in das sie integriert sind.

## Claims

1. A helicopter hoist, said hoist being in electric continuity with the helicopter, and comprising a drum onto which is wounded a hoisting cable (1), the free end of which receiving a hoisting hook (5), said hoisting cable (1) comprising at least one first electric conductor (3) built into a non-conductive structure (2), ***characterized:***
▪ in that the hoisting cable comprises at least a second electric conductor, electrically isolated from the first conductor along the entire length of the hoisting cable, and
▪ in that the assembly composed of the drum, the two electric conductors (3) built into the hoisting cable and the hoisting hook forms an electric circuit closed on a switch (7), said switch (7) being arranged either at the level of said hoisting hook or at the level of the drum.

2. Helicopter hoist of claim 1, ***characterized* in that** the switch (7) is operated by the helicopter crew, by the hoist operator, or automatically.

3. Helicopter hoist of any of claims 1 and 2, ***characterized* in that** the electric circuit further comprises an electric quantity measurement member (8), mounted in series on one of the electric conductor (3).

4. Helicopter hoist of claim 3, ***characterized* in that** the measured electric quantity is the resistance or the resistivity.

5. Helicopter hoist of any of claims 1 to 4, ***characterized* in that** the hoisting cable comprises a third electric conductor, and **in that** the electric circuit is assembled in multiway switching assembly between two switches arranged within the drum and the hoisting hook.

6. Helicopter hoist of any of claims 1 to 5, ***characterized* in that** the electric conductors (3) have a breaking strength and a fatigue strength lower than those of the composite or textile structure (2) of the hoisting cable incorporating them
